**Europäisches Patentamt**

**European Patent Office**

**Office européen des brevets**

(11) Veröffentlichungsnummer: **0 086 252**
**A1**

# EUROPÄISCHE PATENTANMELDUNG

(21) Anmeldenummer: **82107370.7**

(22) Anmeldetag: **13.08.82**

(51) Int. Cl.³: **B 23 K 9/09**, G 05 F 1/58

(30) Priorität: **13.02.82 DE 3205196**

(43) Veröffentlichungstag der Anmeldung: **24.08.83**
**Patentblatt 83/34**

(84) Benannte Vertragsstaaten: **AT DE FR GB IT NL**

(71) Anmelder: **Carl Cloos Verwaltungsgesellschaft oHG,
Postfach 121, D-6342 Haiger (DE)**

(72) Erfinder: **Cloos, Erwin, Bergstrasse 2, D-6342 Haiger
(DE)**
Erfinder: **Becker, Kurt, Kurtenbachweg,
D-6342 Haiger-Oberrossbach (DE)**
Erfinder: **Stöcklein, Erich, Oranienstrasse 24,
D-6342 Haiger-Rodenbach (DE)**
Erfinder: **Gläser, Helmut, Hauptstrasse 125,
D-6340 Dillenburg-Sechshelden (DE)**

(74) Vertreter: **Missling, Arne, Dipl.-Ing. et al, Patentanwälte
Dipl.-Ing. R. Schlee Dipl.-Ing. A. Missling
Bismarckstrasse 43, D-6300 Giessen (DE)**

(54) **Schweissstromquelle für das Impulslichtbogenschweissen.**

(57) Bei Schweißstromquellen, die mit einer Vielzahl parallel geschalteter Transistoren zur Regelung des Schweißstromes versehen sind, deren jeweilige Basis untereinander parallel geschaltet sind und von einer gemeinsamen Steuereinrichtung angesteuert werden und bei denen jeweils im Ermitterkreis ein der Symmetrierung dienender Widerstand eingeschaltet ist, besteht das Problem, diese Schweißstromquelle auch bei einem Kollektor-Basis-Durchbruch betriebsbereit zu halten, so daß der Schweißvorgang nicht unterbrochen zu werden braucht. Dies wird dadurch gewährleistet, daß in jene von der Sammelleitung abzweigende Zuleitung zur Basis der jeweils parallel geschalteten Transistoren eine Sicherung eingeschaltet ist, die so bemessen ist, daß diese bei Überschreiten eines vorgegebenen Sollstromes in der jeweiligen Basiszuleitung diese unterbricht.

Prinzipschaltung Leistungsteil GLC 403 PA-T

—1—

Carl Cloos Verwaltungsgesellschaft oHG
D-6342 Haiger

Schweißstromquelle für das Impulslichtbogenschweißen

Die Erfindung betrifft eine Schweißstromquelle mit einer Vielzahl parallel geschalteter Transistoren zur Regelung des Schweißstromes, deren jeweilige Basis untereinander parallel geschaltet sind und von einer gemeinsamen Steuereinrichtung angesteuert werden und bei denen jeweils im Emitterkreis ein der Symmetrierung dienender Widerstand eingeschaltet ist.

Vorstehend beschriebene Schweißstromquellen werden für Schweißmaschinen eingesetzt, mit denen nach dem Impulslichtbogenverfahren geschweißt wird. Diese Schweißmaschinen gestatten es, den Grundstrom sowie die Impulshöhe, die Impulsbreite sowie die Frequenz der Impulse einzustellen. Der Vorteil derartiger Schweißstromquellen besteht darin, daß diese sich ausgezeichnet für die Schweißung von Stahl eignen, wobei die Schweißung spritzerfrei und mit sehr hoher Schweißgeschwindigkeit durchgeführt werden kann. Der Vorteil besteht darin, daß mit diesen Schweißmaschinen in kürzester Zeit eine Schweißnaht erhalten wird, die keinerlei Nachbearbeitung bedarf, so daß sich derartige Schweißstromquellen vorteilhaft bei vollautomatischen Schweißmaschinen einsetzen lassen.

Die Stromquellen sind mit bis zu 140 Transistoren bestückt, die alle parallel geschaltet sind. Dies ist deshalb erforderlich, weil es zurzeit keinen Transistor gibt, der den gesamten Schweißstrom führen könnte. Aufgrund dieser Vielzahl der eingebauten Transistoren kommt es immer wieder zu Ausfällen, auch dann, wenn die Transistoren zuvor selektiert werden. Es verbleibt hier eine Restausfallquote von ca. 0,5 %, was im vorliegenden Fall der Parallelschaltung der vielen Transistoren bedeutet, daß praktisch jede Schweißstromquelle in der Frühphase ausfallen kann.

Die Symmetrierung dieser Transistoren, d.h. die Maßnahme, die getroffen wird, damit sämtliche Transistoren in etwa den gleichen Strom führen , besteht in der Anordnung eines Widerstandes im Emitterkreis. Diese Art der Symmetrierung ist auch bei den hohen auftretenden Betriebstemperaturschwankungen von 0 bis 70° C ausreichend. Allerdings hat sich beim Betrieb dieser Anlagen herausgestellt, daß es, falls es zu einem Kollektor-Basis-Durchbruch eines Transistors kommt, dann die gesamte Kaskade über die Basis dieses durchgebrochenen Transistors ausgesteuert wird, so daß die gesamte Schweißmaschine auf Maximalstrom betrieben wird. Die Folge ist, daß die Maschine nicht mehr betriebsbereit ist.

Der Erfindung liegt die Aufgabe zugrunde, eine Schweißstromquelle der eingangs genannten Art so auszubilden, daß auch bei einem Kollektor-Basis-Durchbruch eines oderer mehrerer Transistoren die Maschine betriebsbereit bleibt und der Schweißvorgang nicht unterbrochen zu werden braucht.

Diese Aufgabe wird erfindungsgemäß dadurch gelöst, daß in jede von der Sammelleitung abzweigende Zuleitung zur Basis jedes parallel geschalteten Transistors eine Sicherung eingeschaltet ist, die so bemessen ist, daß diese bei Überschreiten eines vorgegebenen Sollstroms in der Basiszuleitung diese unterbricht. Hierdurch wird erreicht, daß, falls ein Kollektor-Basis-Durchbruch bei einem Transistor erfolgt, der Rückstrom, der dann ein Vielfaches des Steuerstromes für diesen Transistor beträgt, die Sicherung betätigt, so daß die Basis dieses defekten Transistors dann von den Basen der anderen Transistoren getrennt ist. Die Folge ist, daß dieser defekte Transistor zwar nicht mehr an der Stromleitung teilnimmt, daß jedoch über diesen Transistor auch keine Rückwirkung mehr auf die anderen verbleibenden Transistoren ausgeübt werden kann, so daß die Stromquelle insgesamt funktionstüchtig bleibt. Der Ausfall eines oder auch mehrerer Transistoren einer mit etwa 140 Transistoren bestückten Stromquelle hat nur zur Folge, daß die verbleibenden Transistoren 1/140 oder einen entsprechenden Bruchteil mehr des Gesamtstromes ziehen müssen, was ohne Schaden derselben möglich ist. Die Einsatzbereitschaft der Stromquellen bleibt somit auch bei Ausfall eines oder auch mehrerer Transistoren erhalten, die bei routinemäßigen Kontrollen zu einem späteren Zeitpunkt ersetzt werden können.

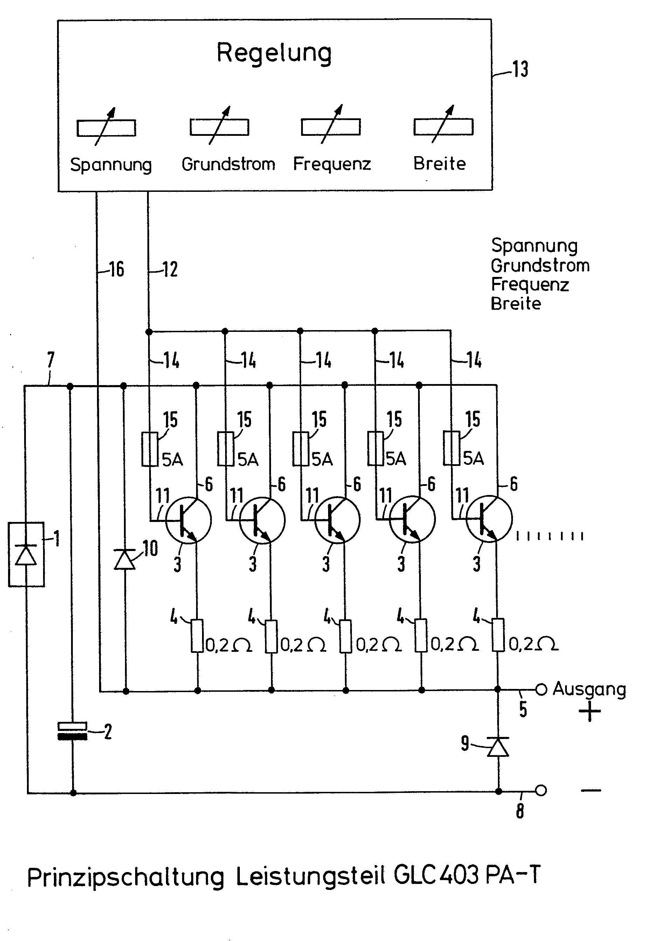

Ein Ausführungsbeispiel der Erfindung ist im folgenden anhand der Zeichnung näher beschrieben, die ein Prinzipschaltbild einer erfindungsgemäßen Stromquelle zeigt.

In der Zeichnung ist die Gleichstromversorgung mit 1 bezeichnet. Parallel zur Gleichstromversorgung ist ein Kondensator 2 eingeschaltet, der zur Glättung der Restwelligkeit des Schweißstromes dient. Eine Vielzahl von Transistoren 3 sind einander parallel geschaltet, wobei in den Emitterkreis ein Symmetrierwiderstand 4 jeweils eingeschaltet ist. Diese Emitterwiderstände 4 sind mit ihrem anderen Ende an einer gemeinsamen, zum Ausgang führenden Leitung 5 angeschlossen. Die Kollektoren 6 sämtlicher Transistoren sind an einer gemeinsamen Leitung 7, die zur Stromversorgung 1 führt, angeschlossen. Zwischen der Leitung 5 und der Leitung 8, die mit dem anderen Ende der Stromversorgung 1 verbunden ist, ist eine Freilaufdiode 9 eingeschaltet. Des weiteren ist zwischen der Leitung 7 und der Leitung 5 eine weitere Diode 10 eingeschaltet,die als Schutzdiode bei Lastabriß dient.

Jede Basis 11 der parallel geschalteten Transistoren 3 ist mit einer Leitung 12 verbunden, die zu einer Regeleinrichtung 13 führt. Von der gemeinsamen Leitung 12 gehen eine Vielzahl von Leitungen 14 ab, die als Zuleitung zur jeweiligen Basis 11 des Transistors 3 dienen. In diese Zuleitungen 14 ist jeweils eine Sicherung 15 eingesetzt, die im Ausführungsbeispiel als Abschmelzdraht ausgebildet ist.

Die zweite von der Regelung 13 kommende Leitung 16 ist mit der Leitung 5 verbunden, an die auch die Emitterwiderstände 4 angeschlossen sind. Mit der Regelung 13 läßt sich in bekannter Weise der Grundstrom sowie die Impulsspannung, die Impulsfrequenz und die Impulsbreite einstellen. Sollte einer der ca. 140 Transistoren schadhaft werden und einen Kollektor-Basis-Durchbruch erleiden, so wird eine Sicherung 15, die im Ausführungsbeispiel mit 5 A bemessen ist, infolge des dann wesentlich größeren Rückstromes durchbrennen, so daß die Basis des betroffenen Transistors von der Zuleitung 12 und somit auch von den anderen Basen der parallel geschalteten Transistoren abgeschaltet ist, so daß ein derartiger Schaden keinerlei Einfluß auf die Betriebsbereitschaft der Schweißstromquelle hat.

- 1 -

Patentanspruch:

Schweißstromquelle mit einer Vielzahl parallel geschalteter Transistoren zur Regelung des Schweißstromes, deren Basen parallel geschaltet sind und von einer gemeinsamen Steuereinrichtung angesteuert werden und bei denen jeweils im Emitterkreis ein der Symmetrierung dienender Widerstand eingeschaltet ist, dadurch gekennzeichnet, daß in jede von der Sammelleitung (12) abzweigende Zuleitung (14) zur Basis (11) der jeweils parallel geschalteten Transistoren (3) eine Sicherung (15) eingeschaltet ist, die so bemessen ist, daß diese bei Überschreiten eines vorgegebenen Sollstromes in der jeweiligen Basiszuleitung (14) diese unterbricht.

1/1

Prinzipschaltung Leistungsteil GLC 403 PA-T

Europäisches
Patentamt

**EUROPÄISCHER RECHERCHENBERICHT**

Nummer der Anmeldung

EP 82 10 7370

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 792 225 (THE WELDING INSTITUTE) <br> * Figuren 3,4 * <br><br> --- | 1 | B 23 K 9/09 <br> G 05 F 1/58 |
| Y | CRYOGENICS, Band 16, Nr. 9, September 1976, Seiten 545-548, Guildford, GB <br> N.S. BYCHKOV et al.: "A stabilized source for currents up to 3200 A for a superconducting solenoid" * Seite 545, Absatz 3; Figur 1 * <br><br> ----- | 1 | |

RECHERCHIERTE SACHGEBIETE (Int. Cl. ³)

B 23 K
G 05 F

Der vorliegende Recherchenbericht wurde für alle Patentansprüche erstellt.

| Recherchenort | Abschlußdatum der Recherche | Prüfer |
|---|---|---|
| DEN HAAG | 19-05-1983 | HOORNAERT W. |